# EUROPEAN PATENT SPECIFICATION

(11) **EP 3 816 610 B1**
(45) Date of publication and mention of the grant of the patent: **03.05.2023**
(21) Application number: 19814893.4
(22) Date of filing: 05.06.2019
(51) Int. Cl.: G01N 21/27, G01N 21/31, G01N 21/85, G01N 21/3577, G01N 21/359, G01N 21/64, G01N 21/65, G01N 21/75, G01N 21/84

(54) **OPTICAL ANALYSIS SYSTEM AND OPTICAL ANALYSIS METHOD**
SYSTEM ZUR OPTISCHEN ANALYSE UND VERFAHREN ZUR OPTISCHEN ANALYSE
SYSTÈME D'ANALYSE OPTIQUE ET PROCÉDÉ D'ANALYSE OPTIQUE

(30) Priority: 07.06.2018 JP 2018109776; 07.06.2018 JP 2018109780; 17.12.2018 JP 2018235827
(43) Date of publication of application: 05.05.2021
(73) Proprietor: YOKOGAWA ELECTRIC CORPORATION, Musashino-shi Tokyo 180-8750 (JP)
(72) Inventor: MURAYAMA Kodai, Musashino-shi, Tokyo 180-8750 (JP); ITO Atsushi, Musashino-shi, Tokyo 180-8750 (JP); OGAWA Junichi, Musashino-shi, Tokyo 180-8750 (JP); MIYAZAKI Shunichi, Musashino-shi, Tokyo 180-8750 (JP)
(74) Representative: Zimmermann, Tankred Klaus
(86) International application number: PCT/JP2019/022417
(87) International publication number: WO 2019/235542

(56) References cited:
- WO-A1-2005/038439
- WO-A1-2016/063918
- DE-A1- 10 005 130
- JP-A- H09 288 005
- JP-A- 2004 163 422
- JP-A- 2004 347 598
- JP-A- 2007 524 845
- JP-A- 2009 128 175
- JP-A- 2014 126 383
- US-A1- 2002 197 725
- US-A1- 2003 130 433
- US-A1- 2015 247 210

## Description

### TECHNICAL FIELD

The present disclosure relates to an optical analysis system and an optical analysis method.

### BACKGROUND

Techniques associated with chemical reaction systems for obtaining products by synthesizing different raw materials are conventionally known.

For example, JP 4005557 B sets forth a sugar chain synthesizing apparatus that includes a separation means for separating a reaction product, an unreacted product, and a by-product in an elute from one or more reaction columns. For example, JP 5859393 B sets forth an apparatus and a method associated with a microfluidic system that can serve as a means for compound synthesis.

In conventional chemical reaction systems, synthetic experiments are conducted under various conditions to determine optimum chemical reaction conditions that improve a product yield. Some calculation methods for calculating a yield are known. One of the calculation methods is a method for qualitatively confirming whether a target product is obtained by performing a nuclear magnetic resonance (NMR) method, and then directly measuring an amount of the product extracted by a purification procedure. Another calculation method is a method for calculating a relative yield from a peak area of a light absorption spectrum of a product by performing a high performance liquid chromatography (High Performance Liquid Chromatography (HPLC)) method.

In the conventional chemical reaction systems, a product may include a pair of compounds having an enantiomer relationship with each other. Some analytical methods for analyzing such a pair of compounds having different optical activities are known. One of the analysis methods is an HPLC method using a chiral column. Another analysis method is a method using a circular dichroism dispersion meter.

DE 100 05 130 A1 describes the control of polymerization involving measuring near OH, NH, COOH, NCO and/or epoxide IR absorption bands to determine the chemical groups in comparison to calibration data using a device connected to a spectrometer by glass fiber cable.

WO 2005/038439 A1 describes a method and apparatus to monitor an enantiomeric excess of chiral molecules participating in a chemical reaction. The method includes real time monitoring of the chemical reaction by obtaining a VCD spectrum and an IR spectrum of the chemical compounds in the reaction, and manipulating the spectra to obtain a % EE value. Using such real time information, the reaction parameters can be changed to shift the reaction to produce more of one chiral molecule than another.

US 2003/130433 A1 describes a process of preparing a graft polymer (e.g., an ABS graft copolymer), which involves determining the concentration of at least one reaction component during the course of the reaction by means of Raman spectroscopy. The process, more particularly, comprises: (a) synthesizing the graft polymer from a reaction mixture comprising reactive components (e.g., monomers such as styrene and acrylonitrile, and a graft base); (b) analyzing the reaction mixture, at intervals, during the synthesis of the graft polymer, by means of Raman spectra; (c) recording the results of the Raman spectra analysis; (d) determining the concentration of at least one of said reactive components (e.g., styrene) by means of spectral evaluation of the recorded Raman spectra; and (e) terminating the synthesis reaction of the graft polymer when the concentration of at least one of the reactive components has reached a predetermined concentration value.

### SUMMARY

Conventionally, when calculating or analyzing a parameter associated with a chemical reaction including a yield of a product or the like, a temporal change of the parameter, or information associated with a chemical reaction that includes information regarding an optical isomerism of the product or the like, it is necessary to extract a measuring sample after the completion of or during a chemical reaction. Further, the extracted sample is processed for calculation or analysis and discarded after the calculation or analysis.

It is an object of the present invention to provide an optical analysis system and an optical analysis method that enable an analysis on information regarding a chemical reaction in a non-destructive manner without the necessity to extract a sample.

This object is achieved by an optical analysis system according to claim 1, and by an optical analysis method according to claim 11.

### (Solution to Problem)

An optical analysis system according to the invention includes: an irradiator configured to, in a chemical reaction system for obtaining a product by synthesizing a first raw material and a second raw material, irradiate each of the first raw material and the second raw material prior to initiation of synthesis with irradiation light and irradiate a mixture after initiation of the synthesis that includes the first raw material, the second raw material, and the product with irradiation light; a detector configured to detect measuring light that is based on the irradiation light radiated by the irradiator and includes information regarding an optical spectrum of each of the first raw material, the second raw material, and the mixture; and an arithmetic unit configured to calculate the optical spectrum of each of the first raw material, the second raw material, and the mixture based on the detected measuring light and, based on the optical spectra of the first raw material, the second raw material, and the mixture, calculate an optical spectrum of the product. A yield of the product obtained by chemical synthesis can be calculated based on the optical spectrum of the product calculated by the arithmetic unit. Thus, an amount of the product synthesized in the chemical reaction system can be analyzed in a non-destructive manner without the necessity to extract a sample.

In one embodiment, the product may include one of a non-isomerized compound and a pair of compounds having an enantiomer relationship with each other. Information regarding optical isomerism of the product obtained by the chemical synthesis can be analyzed based on the optical spectrum of the product calculated by the arithmetic unit. According to the optical analysis system of the embodiment, thus, the information regarding the optical isomerism of the product synthesized in the chemical reaction system can be analyzed in a non-destructive manner without the necessity to extract a sample.

In one embodiment, the irradiator may irradiate the mixture with the irradiation light for each of a plurality of reaction times, and the arithmetic unit may calculate a temporal change of a parameter associated with a chemical reaction, based on the optical spectrum of the product calculated for each of the plurality of reaction times. The temporal change of the parameter associated with the chemical reaction obtained by the chemical synthesis can be calculated based on the optical spectrum of the product calculated by the arithmetic unit. According to the optical analysis system of the embodiment, thus, the temporal change of the parameter associated with the chemical reaction can be analyzed in a non-destructive manner without the necessity to extract a sample.

In one embodiment, the parameter associated with the chemical reaction may include a yield of the product. This enables an analysis of a temporal change of the yield of the product in the chemical reaction system.

In one embodiment, the arithmetic unit may calculate the optical spectrum of the product by subtracting an optical spectrum of each of the first raw material and the second raw material from an optical spectrum of the mixture. Thereby, the optical spectrum of the product buried in the optical spectrum of the mixture is extracted. This improves an accuracy associated with the calculation or analysis of the information regarding the chemical reaction based on the optical spectrum.

In one embodiment, the chemical reaction system may include a flow-type synthetic reaction system in which each of the first raw material, the second raw material, and the mixture flows in a flow path. As a result, in the flow-type synthetic reaction system where it is difficult to extract a measuring sample, a light absorption spectrum can be measured in a non-contact manner using an optical method, without the necessity to extract a sample. Thus, information regarding a chemical reaction can be calculated or analyzed on a real-time basis.

In one embodiment, the irradiator may radiate the irradiation light at each of a plurality of positions located along the flow path for flowing the mixture. Accordingly, in the flow-type synthetic reaction system in which the mixture flows in the flow path, an optical spectrum of the product can be calculated for each of a plurality of reaction times. Thus, a temporal change of a parameter associated with a chemical reaction can be calculated on a real-time basis, in a nondestructive manner using an optical method without the necessity to extract a sample.

In one embodiment, each of the first raw material and the second raw material may include an amino acid, and the product may include a compound formed by a peptide bond. This enables an analysis of a peptide composed of a plurality of amino acids.

In one embodiment, a wavelength band of the measuring light may be included in a near infrared region from 1800 nm to 2500 nm. This enables the optical analysis system to calculate an optical spectrum that appears in the near-infrared region and is attributed to a predetermined structure of the compound.

In one embodiment, the measuring light may include transmitted light based on the irradiation light transmitted through each of the first raw material, the second raw material, and the mixture, and the optical spectrum may include a light absorption spectrum. For example, in other spectroscopic methods such as fluorescence spectroscopy and Raman spectroscopy, measuring light such as fluorescence or Raman light has a low intensity, which is thus not easily detected. On the other hand, by using absorption spectroscopy, the intensity of the measuring light is increased and thus is easily detected. Accordingly, the optical analysis system can easily calculate the optical spectrum.

An optical analysis method according to the invention includes: a step of, in a chemical reaction system for obtaining a product by synthesizing a first raw material and a second raw material, irradiating each of the first raw material and the second raw material prior to initiation of synthesis with irradiation light and irradiating a mixture after initiation of the synthesis that includes the first raw material, the second raw material, and the product with irradiation light; a step of detecting measuring light that is based on the irradiation light and includes information regarding an optical spectrum of each of the first raw material, the second raw material, and the mixture; and a step of calculating the optical spectrum of each of the first raw material, the second raw material, and the mixture based on the detected measuring light and, based on the optical spectra of the first raw material, the second raw material, and the mixture, calculating an optical spectrum of the product. A yield of the product obtained by the chemical synthesis can be calculated based on the calculated optical spectrum of the product. Thus, an amount of the product synthesized in the chemical reaction system can be analyzed in a non-destructive manner without the necessity to extract a sample.

In one embodiment, the product may include one of a non-isomerized compound and a pair of compounds having an enantiomer relationship with each other. Information regarding the optical isomerism of the product obtained by chemical synthesis can be analyzed based on the calculated optical spectrum of the product. According to the optical analysis system of the embodiment, thus, the information regarding the optical isomerism of the product synthesized in the chemical reaction system can be analyzed in a non-destructive manner without the necessity to extract a sample.

In one embodiment, the step of radiating the irradiation light may include a step of irradiating the mixture with the irradiation light for each of a plurality of reaction times, and the optical analysis method comprises a step of calculating a temporal change of a parameter associated with a chemical reaction, based on the optical spectrum of the product calculated for each of the plurality of reaction times. The temporal change of the parameter associated with the chemical reaction obtained by the chemical synthesis can be calculated based on the calculated optical spectrum of the product. According to the optical analysis method of the embodiment, thus, the temporal change of the parameter associated with the chemical reaction can be analyzed in a non-destructive manner without the necessity to extract a sample.

In one embodiment, in the step of calculating the optical spectrum of the product, the optical spectrum of the product may be calculated by subtracting an optical spectrum of each of the first raw material and the second raw material from an optical spectrum of the mixture. Thus, the optical spectrum of the product buried in the optical spectrum of the mixture is extracted. This improves an accuracy associated with the calculation or analysis of the information regarding the chemical reaction based on the optical spectrum.

### (Advantageous Effect)

According to the present disclosure, an optical analysis system and an optical analysis method that are capable of analyzing information regarding a chemical reaction in a non-destructive manner without the necessity to extract a sample can be provided.

### BRIEF DESCRIPTION OF THE DRAWINGS

FIG. 1 is a schematic diagram illustrating an example configuration of an optical analysis system according to a first embodiment;
FIG. 2 is a block diagram illustrating the optical analysis system illustrated in FIG. 1;
FIG. 3A is a schematic diagram illustrating an example of a light absorption spectrum of a first raw material;
FIG. 3B is a schematic diagram illustrating an example of a light absorption spectrum of a second raw material;
FIG. 3C is a schematic diagram illustrating an example of a light absorption spectrum of a mixture;
FIG. 3D is a schematic diagram illustrating an example of a light absorption spectrum of a product;
FIG. 4A is a schematic diagram illustrating an example of a light absorption spectrum of the product at a position P1;
FIG. 4B is a schematic diagram illustrating an example of a light absorption spectrum of the product at a position P2;
FIG. 4C is a schematic diagram illustrating an example of a light absorption spectrum of the product at a position P3;
FIG. 4D is a schematic diagram illustrating an example of a light absorption spectrum of the product at a position P4;
FIG. 4E is a schematic diagram illustrating an example of a light absorption spectrum of the product at a position P5;
FIG. 5 is a flow chart illustrating an example of an operation by the optical analysis system illustrated in FIG. 1;
FIG. 6A is a schematic diagram illustrating an example of a light absorption spectrum of the product at the position P1;
FIG. 6B is a schematic diagram illustrating an example of a light absorption spectrum of the product at the position P2;
FIG. 6C is a schematic diagram illustrating an example of a light absorption spectrum of the product at the position P3;
FIG. 6D is a schematic diagram illustrating an example of a light absorption spectrum of the product at the position P4;
FIG. 6E is a schematic diagram illustrating an example of a light absorption spectrum of the product at the position P5;
FIG. 7 is a diagram illustrating an example of a temporal change of a parameter associated with a chemical reaction calculated by an arithmetic unit of an optical analysis system according to a third embodiment;
FIG. 8 is a flowchart illustrating an example of an operation by the optical analysis system according to the third embodiment; and
FIG. 9 is a block diagram illustrating an example variation of the optical analysis system according to the first embodiment to the third embodiment.

### DETAILED DESCRIPTION

### First Embodiment

A first embodiment of the present disclosure will be mainly described. In the first embodiment, information regarding a chemical reaction refers mainly to a yield of a product. The first embodiment will be described focusing mainly on the yield of the product. First, problems of conventional techniques will be described.

An NMR method is widely used as a method for confirming whether a product is synthesized in a chemical reaction. An NMR spectrum obtained by the NMR method indicates a characteristic peak based on a functional group present in, for example, an organic compound or the like. An operator recognizes whether the product is synthesized, by analyzing whether the NMR spectrum characteristic to the product is obtained.

To calculate the yield of the product, a ratio of an amount of an actually obtained product to an amount of the product when chemical synthesis has completely proceeded needs to be calculated. The most direct method for calculating the yield of the product is a method for purifying the product and directly measuring its amount. In theory, because the amount of the product when the chemical synthesis has completely proceeded can be easily calculated, the yield of the product can be easily calculated by directly measuring the amount of the product.

On the other hand, an HPLC method is used when it is difficult to purify the product. The HPLC method is a method in which the product and impurities are separated utilizing chemical properties of the compound such as, for example, a difference in hydrophobic interactions, and an amount of the product is calculated from an ultraviolet absorption amount. Using the HPLC method enables obtainment of a UV absorption spectrum of each of the product and the impurities. A value obtained by adding a total peak area of the ultraviolet absorption spectrum indicates an amount of all compounds present in a chemical reaction system to be analyzed. Thus, the yield of the product is calculated by measuring a peak area based on the product and calculating a ratio of the peak area to a total peak area.

In the conventional techniques, it is necessary to extract a measuring sample after the completion of or during a chemical reaction and to set the sample in an analyzer. Thus, there is a time lag between a time at which the chemical reaction is in progress and a time at which the analysis result is acquired. This inhibits an operator to measure the amount of the product in a target chemical reaction system on a real-time basis. Further, an extracted sample is processed for analysis and discarded after the analysis. In the conventional techniques, that is, analyses were performed in a destructive manner. In a case in which the chemical reaction system is, for example, a flow-type synthesis reaction system, it is fundamentally difficult to extract a measuring sample from a solution flowing in a flow path.

In the conventional techniques, a synthetic experiment is conducted under various conditions to determine an optimal chemical reaction condition that leads to a high product yield. To that end, an operator needs to repeat procedures such as an NMR analysis, product purification, a measurement of an amount, and an HPLC analysis, for each synthesis experiment. This causes an increase in the number of work steps for optimizing the chemical reaction conditions and deterioration of the work efficiency for the optimization.

The conventional technique using the NMR method requires a large-scale apparatus to induce nuclear magnetic resonance necessary for the NMR analysis. Thus, the analyzer is costly and incurs high maintenance cost. In a case in which a certain degree of purity is required to conduct an analysis, a purification step for the analysis is required, which further increases the cost necessary for the analysis. Similarly, the conventional techniques using the HPLC method require a column and a mechanism for manipulating the solution. Accordingly, the analyzer is costly and incurs high maintenance cost.

An optical analysis system 1 according to the first embodiment of the present disclosure solves the above problems and can analyze an amount of a product AB synthesized in the chemical reaction system 30 in a non-destructive manner without the necessity to extract a sample. Hereinafter, the optical analysis system 1 according to the first embodiment of the present disclosure will be described with reference to the accompanying drawings.

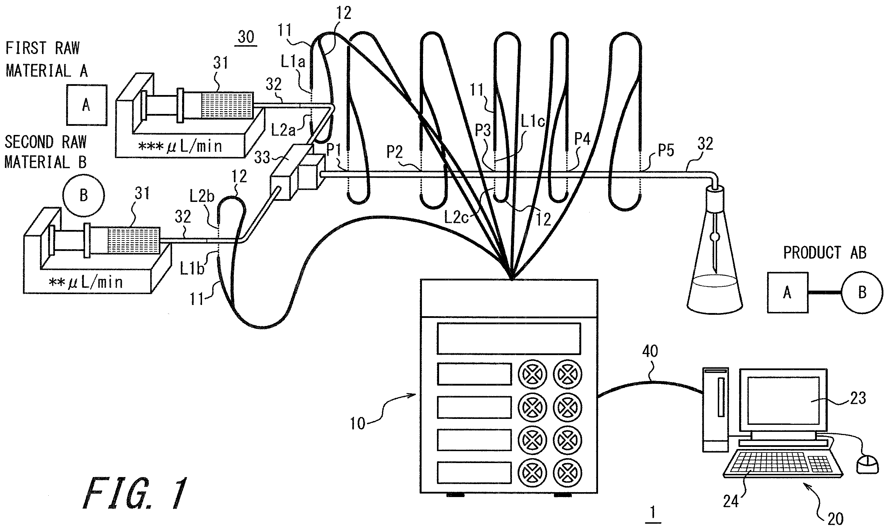

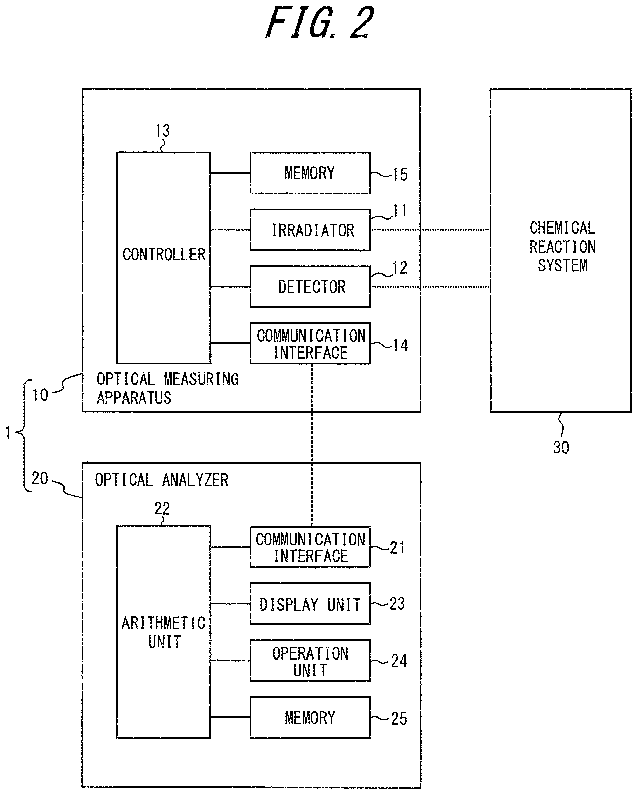

FIG. 1 is a schematic diagram illustrating an example configuration of the optical analysis system 1 according to the first embodiment. FIG. 2 is a block diagram illustrating the optical analysis system 1 illustrated in FIG. 1. The configuration and function of the optical analysis system 1 according to the first embodiment will be mainly described with reference to FIG. 1 and FIG. 2.

The optical analysis system 1 is installed in, for example, a chemical reaction system 30 that obtains the product AB by synthesizing a first raw material A and a second raw material B. The optical analysis system 1 irradiates the chemical reaction system 30 with irradiation light including irradiation light L1a, L1b, and L1c. The optical analysis system 1 calculates an optical spectrum of each of the first raw material A and the second raw material B prior to the initiation of the synthesis, and an optical spectrum of a mixture C including the first raw material A, the second raw material B, and the product AB after the initiation of the synthesis. The optical analysis system 1 calculates the optical spectrum of the product AB, based on each of the optical spectra.

The chemical reaction system 30 includes liquid feeding pumps 31, flow chemical reaction tubes 32, and a microreactor 33. The chemical reaction system 30 includes, for example, a continuous flow-type synthetic reaction system in which each of the first raw material A and the second raw material B prior to the initiation of the synthesis, and a mixture C that includes the first raw material A, the second raw material B, and the product AB after the initiation of the synthesis flows in the respective flow chemical reaction tubes 32. The first raw material A and the second raw material B are pumped out by the respective liquid feeding pumps 31, pass through respective flow chemical reaction tubes 32, and then are introduced into the microreactor 33. At this time, the first raw material A and the second raw material B are instantaneously mixed, which initiates chemical synthesis. The mixture C including the first raw material A, the second raw material B, and the product AB after the initiation of the synthesis further flows in a flow chemical reaction tube 32 located on the downstream side of the microreactor 33. Then, the chemical synthesis is completed.

Each of the first raw material A and the second raw material B in the chemical reaction system 30 includes any compound. Each of the first raw material A and the second raw material B may include, for example, an amino acid. Similarly, the product AB includes any compound such as a polymer or an oligomer. The product AB may include, for example, a compound formed by an amide bond or a compound formed by a peptide bond based on a plurality of amino acids.

The optical analysis system 1 is installed in the chemical reaction system 30 as described above. The optical analysis system 1 includes an optical measuring apparatus 10 and an optical analyzer 20.

The optical measuring apparatus 10 includes, for example, any measuring apparatus capable of measuring a light absorption amount for each wavelength of measuring light including measuring light L2a, L2b, and L2c, which will be described later. As illustrated in FIG. 2 by way of example, the optical measuring apparatus 10 includes an irradiator 11, a detector 12, a controller 13, a communication interface 14, and a memory 15. The optical measuring apparatus 10 measures a light absorption amount for each wavelength of the measuring light having a wavelength band included in a near infrared region from 1800 nm to 2500 nm, based on, for example, the irradiation light radiated from the irradiator 11 to the inside of the flow chemical reaction tube 32. The measuring light includes transmitted light that is based on the irradiation light and transmitted through each of the first raw material A, the second raw material B, and the mixture C. The irradiation light radiated from the irradiator 11 passes through each of the first raw material A, the second raw material B, and the mixture C, and is then detected as the measuring light by the detector 12.

The irradiator 11 includes, for example, any light source such as a semiconductor laser and an any light guide element such as an optical fiber that guides the irradiation light radiated from the light source into the flow chemical reaction tube 32. The irradiator 11 irradiates the inside of the flow chemical reaction tube 32 of the chemical reaction system 30 with the irradiation light having a wavelength band included in, for example, the near infrared region from 1800 nm to 2500 nm.

In particular, the irradiator 11 respectively irradiates the first raw material A and the second raw material B prior to the initiation of synthesis with the irradiation lights L1a and L1b. The irradiator 11 irradiates the mixture C after the initiation of the synthesis with the irradiation light L1c. In an example, the irradiator 11 radiates the irradiation light L1c at each of five positions P1, P2, P3, P4, and P5 in the flow chemical reaction tube 32 on the downstream side of the microreactor 33. The five positions P1, P2, P3, P4, and P5 in the flow chemical reaction tube 32 are sequentially remote from the microreactor 33. From the position P1 to the position P5, proportions of the first raw material A and the second raw material B in the mixture C sequentially decrease and a proportion of the product AB in the mixture C sequentially increases.

The detector 12 includes, for example, any photodetector such as a photodiode and any light guide element such as an optical fiber that guides the measuring light transmitted through the inside of the flow chemical reaction tube 32 to the photodetector. The detector 12 detects the measuring light that has a wavelength band included in, for example, the near infrared region from 1800 nm to 2500 nm and has been transmitted through the inside of the flow chemical reaction tube 32.

In particular, the detector 12 detects the measuring lights L2a and L2b that have respectively passed through the first raw material A and the second raw material B prior to the initiation of the synthesis. The detector 12 detects the measuring light L2c that has passed through the mixture C after the initiation of the synthesis. In an example, the detector 12 detects the measuring light L2c at each of the five positions P1, P2, P3, P4, and P5 in the flow chemical reaction tube 32. As described above, the detector 12 detects the measuring light that is based on the irradiation light radiated by the irradiator 11 and includes information regarding the optical spectrum of each of the first raw material A, the second raw material B, and the mixture C.

The controller 13 includes one or more processors. For example, the controller 13 includes a processor that realizes processing associated with the optical measuring apparatus 10. The controller 13 is connected to each of elements constituting the optical measuring apparatus 10 and controls and manages the optical measuring apparatus 10 in its entirety including each of the elements. The controller 13 acquires detection information of the measuring light L2 detected by the detector 12 from the detector 12. The controller 13 measures the light absorption amount for each wavelength of the measuring light L2, based on the detection information acquired from the detector 12. The controller 13 outputs data of the light absorption amount for each wavelength to the communication interface 14 and causes the communication interface 14 to transmit the data to the optical analyzer 20. The controller 13 causes the memory 15 to store the data of the light absorption amount for each wavelength, as necessary.

The communication interface 14 includes a communication interface supporting any communication standard that is wired or wireless. The communication interface 14 can be communicatively connected to the optical analyzer 20 via, for example, a data communication cable 40. The communication interface 14 transmits, for example, the data of the light absorption amount for each wavelength acquired from the controller 13 to the optical analyzer 20 via the data communication cable 40. The communication interface 14 receives, for example, setting information associated with the measurement of the light absorption amount for each wavelength of the measuring light, which is set by an operator using the optical analyzer 20, from the optical analyzer 20.

The memory 15 includes any storage device such as, for example, an HDD (Hard Disk Drive), an SSD (Solid State Drive), an EEPROM (Electrically Erasable Programmable Read-Only Any Memory), a ROM (Read-Only Memory), or a ROM (Read-Only Memory). The memory 15 stores various data, programs, and the like processed by the optical measuring apparatus 10. The memory 15 may function as, for example, a main storage device, an auxiliary storage device, or a cache memory. The memory 15 does not need to be incorporated in the optical measuring apparatus 10 and may be an external storage device connected to the optical measuring apparatus 10 via a digital input/output port such as a USB. The memory 15 acquires the data of the light absorption amount for each wavelength from the controller 13 as necessary and stores the data.

The optical analyzer 20 includes any general-purpose electronic apparatus such as, for example, a mobile phone, a smartphone, a tablet PC, a desktop computer, or a mobile computer, or a dedicated information processing apparatus specialized for processing measurement data acquired by the optical measuring apparatus 10. The optical analyzer 20 includes a communication interface 21, an arithmetic unit 22, a display unit 23, an operation unit 24, and a memory 25. The optical analyzer 20 analyzes the measurement data acquired by the optical measuring apparatus 10.

The communication interface 21 includes a communication interface supporting any communication standard that is wired or wireless. The communication interface 21 can be communicatively connected to the optical measuring apparatus 10 via, for example, the data communication cable 40. The communication interface 21 receives, for example, the data of the light absorption amount for each wavelength acquired by the optical measuring apparatus 10 from the optical measuring apparatus 10 via the data communication cable 40. The communication interface 21 transmits, for example, setting information associated with a measurement of the light absorption amount for each wavelength of the measuring light, which is set by the operator using the operation unit 24, to the optical measuring apparatus 10.

The arithmetic unit 22 includes one or more processors. In particular, the arithmetic unit 22 includes any processor such as a general-purpose processor or a dedicated processor specialized for specific processing. The arithmetic unit 22 may include a processor mounted in any general-purpose electronic apparatus such as, for example, a mobile phone, a smartphone, a tablet PC, a desktop computer, or a mobile computer, or a processor mounted in a dedicated information processing apparatus specialized for processing the measurement data acquired by the optical measuring apparatus 10. The arithmetic unit 22 is connected to each of elements constituting the optical analyzer 20 and controls and manages the optical analyzer 20 in its entirety including each of the elements.

The arithmetic unit 22 performs various processes on the measurement data that is obtained by the optical measuring apparatus 10 acquired via the communication interface 21. For example, the arithmetic unit 22 calculates the optical spectrum of each of the first raw material A and the second raw material B prior to the initiation of the synthesis, and the optical spectrum of the mixture C after the initiation of the synthesis. The arithmetic unit 22 calculates the optical spectrum of the product AB, based on each of the spectra. The spectra include, for example, light absorption spectra. The arithmetic unit 22 calculates each of the light absorption spectra, based on, for example, the data of the light absorption amount for each wavelength acquired by the optical measuring apparatus 10.

The arithmetic unit 22 may determine whether the product AB is obtained, based on the calculated light absorption spectrum. For example, the arithmetic unit 22 may determine whether the product AB is obtained, by determining whether a height of a light absorption spectrum peak in a predetermined wavelength set by the operator exceeds a predetermined value. When the arithmetic unit 22 determines that the product AB is obtained, the arithmetic unit 22 may further calculate a yield of the product AB. The determination as to whether the product AB is obtained and the calculation of the yield of the product AB described above does not need to be performed by the optical analyzer 20. In this case, the determination as to whether the product AB is obtained and the calculation of the yield of the product AB may be performed by the operator himself/herself.

The arithmetic unit 22 outputs information regarding each calculated light absorption spectrum to the display unit 23 such that the display unit 23 displays each light absorption spectrum, as necessary. For example, the arithmetic unit 22 receives any operation performed by the operator in respect to the light absorption spectrum displayed on the display unit 23 via the operation unit 24. The arithmetic unit 22 causes the memory 25 to store the information regarding each calculated light absorption spectrum, as necessary.

The display unit 23 includes any output interface that acts to the sight of the operator. The output interface constituting the display unit 23 includes, for example, any display device such as a liquid crystal display or the like. The display unit 23 may include, for example, a liquid crystal display integrated in a mobile computer. The display unit 23 displays each light absorption spectrum calculated by the arithmetic unit 22, as necessary.

The operation unit 24 includes any input interface such as a keyboard, a mouse, a touch pad, or a microphone to receive various instructions input by voice, or the like. The operation unit 24 may be a touch panel integrated with the liquid crystal display that constitutes the display unit 23. The operation unit 24 receives, for example, any operation by the operator in respect to the light absorption spectrum displayed on the display unit 23. The operation unit 24 further receives, for example, an input operation of setting information associated with the measurement using the optical measuring apparatus 10 from the operator.

The memory 25 includes any storage apparatus such as, for example, an HDD, SSD, EEPROM, ROM, or RAM. The memory 25 stores various information, programs, or the like processed by the optical analyzer 20. The memory 25 may function as, for example, a main storage device, an auxiliary storage device, or a cache memory. The memory 25 is not limited to the device incorporated in the optical analyzer 20 and may be an external storage device connected to the optical analyzer 20 via a digital input/output port such as a USB or the like. The memory 25 acquires information regarding each calculated light absorption spectrum from the arithmetic unit 22 as necessary and stores the information.

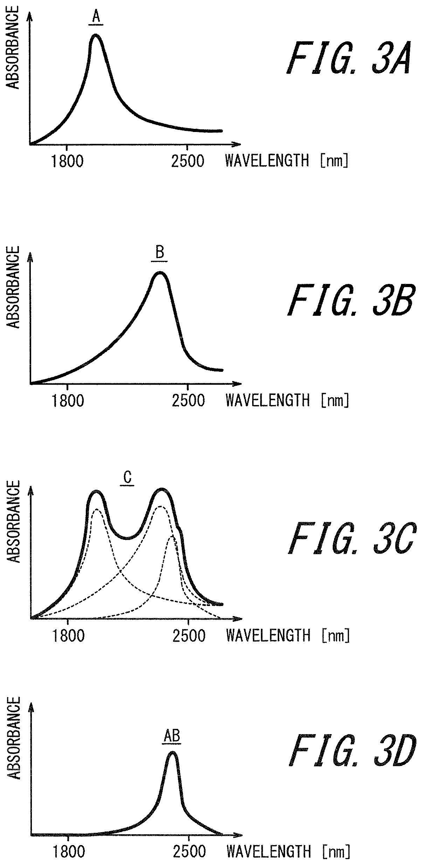

FIG. 3A is a schematic diagram illustrating an example of the light absorption spectrum of the first raw material A. FIG. 3B is a schematic diagram illustrating an example of the light absorption spectrum of the second raw material B. FIG. 3C is a schematic diagram illustrating an example of the light absorption spectrum of the mixture C. FIG. 3D is a schematic diagram illustrating an example of the light absorption spectrum of the product AB. FIG. 3C and FIG. 3D respectively illustrate the light absorption spectra of the mixture C and the product AB at the position P3 located at the center among the five positions P1, P2, P3, P4, and P5 in the flow chemical reaction tube 32.

The compound constituting each of the first raw material A, the second raw material B, and the product AB generally exhibits a plurality of light absorption spectrum peaks, according to a complicated energy level structure including an electronic level, a vibrational level, and a rotational level. Note that each of FIG. 3A, FIG. 3B, and FIG. 3D displays only one light absorption spectrum, for convenience of description.

The graph based on the data of the light absorption amount for each wavelength of the measuring light acquired by the optical measuring apparatus 10 exhibits a dip at a specific absorption transition wavelength of the energy level structure of the compound through which the measuring light is transmitted. The optical analyzer 20 processes such measurement data acquired by the optical measuring apparatus 10 and calculates the light absorption spectrum as illustrated in FIG. 3A to FIG. 3D.

The acquired light absorption spectrum reflects an amount of a predetermined structure of the compound. The predetermined structure of the compound includes, for example, an amide bond, a peptide bond, or the like. The higher the amount of the predetermined structure of the compound, the higher the light absorption spectrum peak. Further, the energy level attributed to the predetermined structure of the compound changes depending on a weight of molecules that make up the left and right sides of the structure. Thus, wavelength positions of the light absorption spectrum peaks attributed to the first raw material A, the second raw material B, and the product AB are generally different from one another.

For example, a light absorption spectrum peak that indicates an amide bond or a peptide bond presents in the near infrared region from 1800 nm to 2500 nm. By measuring the light absorption amount of the measuring light in the band of the near-infrared light absorption spectrum in this wavelength region, an amount of the amide bond or the peptide bond in the product AB at the measurement point can be quantitatively calculated. By calculating the amount of amide bond or peptide bond, the optical analysis system 1 can calculate the yield of the product AB in the chemical reaction system 30 on the real-time basis.

Referring to FIG. 3A, for example, the light absorption spectrum peak of the first raw material A appears on the shorter wavelength side in the near infrared region from 1800 nm to 2500 nm. Referring to FIG. 3B, for example, the light absorption spectrum peak of the second raw material B appears on the longer wavelength side in the near infrared region from 1800 nm to 2500 nm.

For example, because the chemical synthesis is incomplete at the position P3, a large amount of the first raw material A and the second raw material B remain in the mixture C. As illustrated in FIG. 3C, thus, in the light absorption spectrum measurement of the mixture C, a plurality of peaks corresponding to the respective light absorption spectrum peaks of the first raw material A and the second raw material B appear. Further, the proportion of product AB in mixture C is increased at the position P3. Thus, a light absorption spectrum peak attributed to the product AB presents in the light absorption spectrum illustrated in FIG. 3C.

In a case in which the light absorption spectrum peak of the product AB is sufficiently higher than the light absorption spectrum peaks of the first raw material A and the second raw material B, the light absorption spectrum of the product AB clearly projects also in the light absorption spectrum of the mixture C and facilitates its measurement. However, in a case in which the height of the light absorption spectrum peak of the product AB is equal to or less than the light absorption spectrum peaks of the first raw material A and the second raw material B, the light absorption spectrum of the product AB is buried in the light absorption spectrum of the mixture C and complicates its measurement.

To facilitate the measurement of the light absorption spectrum of the product AB even in a case in which the light absorption spectrum of the product AB is buried in the light absorption spectrum of the mixture C, the arithmetic unit 22 subtracts the light absorption spectra of the first raw material A and the second raw material B from the light absorption spectrum of the mixture C. Thus, the arithmetic unit 22 calculates the light absorption spectrum of the product AB as illustrated in FIG. 3D. For example, the arithmetic unit 22 multiplies the peaks of the light absorption spectra of the first raw material A and the second raw material B respectively illustrated in FIG. 3A and FIG. 3B by a predetermined ratio, such that the heights of them approximately match the height of a corresponding light absorption spectrum peak of the mixture C. Then, the arithmetic unit 22 subtracts the light absorption spectra of the first raw material A and the second raw material B from the light absorption spectrum of the mixture C.

In the optical analysis system 1, as described above, the arithmetic unit 22 calculates, for example, the yield of the product AB, based on the height of the light absorption spectrum peak of the product AB. The method for calculating the yield of the product AB is not limited thereto and may include any method. For example, the arithmetic unit 22 may calculate the yield of the product AB in consideration of a width of the light absorption spectrum in addition to the height of the light absorption spectrum peak.

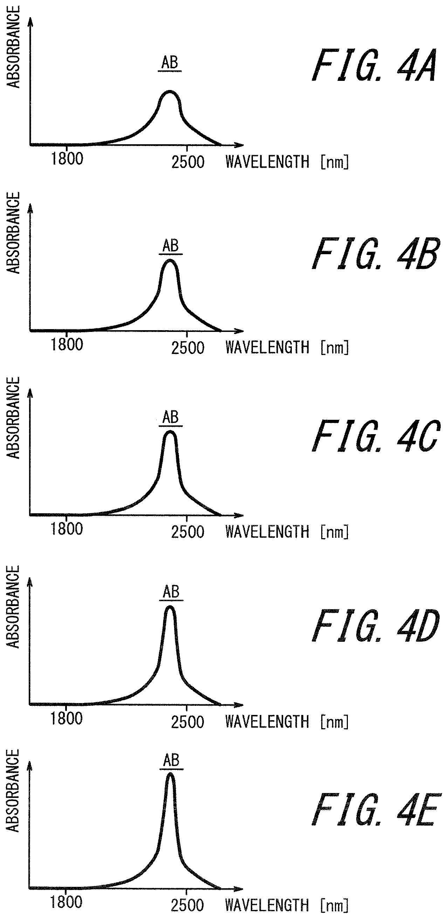

FIG. 4A is a schematic diagram illustrating an example of the light absorption spectrum of the product AB at the position P1. FIG. 4B is a schematic diagram illustrating an example of the light absorption spectrum of the product AB at the position P2. FIG. 4C is a schematic diagram illustrating an example of the light absorption spectrum of the product AB at the position P3. FIG. 4D is a schematic diagram illustrating an example of the light absorption spectrum of the product AB at the position P4. FIG. 4E is a schematic diagram illustrating an example of the light absorption spectrum of the product AB at the position P5.

For example, by performing the measurement at a plurality of positions P1 to P5 in the flow chemical reaction tube 32 as illustrated in FIG. 1, the light absorption spectrum of the product AB can be obtained using a plurality of detectors 12 every time the reaction time elapses. Thus, the amount of the predetermined structure of the compound can be quantitatively calculated with respect to the product AB at each position. Accordingly, the temporal change of the light absorption spectrum of the product AB can be obtained and, as a result, the temporal change of the amount of the predetermined structure of the compound with respect to the product AB can be quantitatively calculated.

Referring sequentially to FIG. 4A to FIG. 4E, for example, as the proportion of the product AB in the mixture C gradually increases from the position P1 to the position P5, the light absorption spectrum peak of the product AB gradually becomes higher. Simultaneously, the proportions of the first raw material A and the second raw material B in the mixture C gradually decrease, whereby the light absorption spectrum peaks of the first raw material A and the second raw material B gradually decrease.

In a case in which a measuring sample is extracted from a fast-flowing solution in the flow chemical reaction tube 32 and the time from immediately after the mixing of the first raw material A and the second raw material B to the completion of the chemical synthesis is very short such as, for example, 0.1 to 0.5 seconds, it is difficult to define the reaction time. On the other hand, the optical analysis system 1 according to the first embodiment can perform the optical analysis without extracting a sample and thus can accurately recognize as to how many seconds after mixing the sample is analyzed.

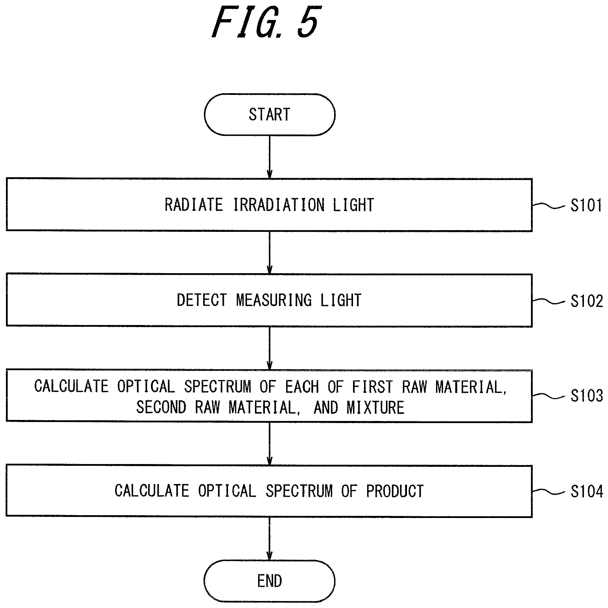

FIG. 5 illustrates a flowchart of an example operation by the optical analysis system 1 illustrated in FIG. 1. The main flow of the optical analysis method using the optical analysis system 1 will be described with reference to FIG. 5.

In step S101, the optical analysis system 1 causes the irradiator 11 of the optical measuring apparatus 10 to irradiate the first raw material A and the second raw material B prior to the synthesis with the irradiation light and to irradiate the mixture C after the synthesis with the irradiation light.

In step S102, the optical analysis system 1 causes the detector 12 of the optical measuring apparatus 10 to detect the measuring light including the information regarding the optical spectrum of each of the first raw material A, the second raw material B, and the mixture C.

In step S103, the optical analysis system 1 causes the arithmetic unit 22 of the optical analyzer 20 to calculate the optical spectrum of each of the first raw material A, the second raw material B, and the mixture C.

In step S104, the optical analysis system 1 causes the arithmetic unit 22 of the optical analyzer 20 to calculate the optical spectrum of the product AB. At this time, the arithmetic unit 22 calculates the optical spectrum of the product AB by subtracting the optical spectra of the first raw material A and the second raw material B from the optical spectrum of the mixture C.

The optical analysis system 1 according to the first embodiment as described above can calculate the yield of the product AB obtained by the chemical synthesis, based on the optical spectrum of the product AB calculated by the arithmetic unit 22. According to the optical analysis system 1 of the first embodiment, thus, the amount of the product AB synthesized in the chemical reaction system 30 can be analyzed in a nondestructively manner without the necessity to extract a sample. According to the optical analysis system 1, the light absorption spectrum is measured in a non-contact manner by the optical method using the optical measuring apparatus 10, whereby the yield of the product AB can be calculated on the real-time basis. The optical analysis system 1 eliminates the necessity to separate the product AB from the mixture C to measure the amount of the product AB and quickly and easily calculates the yield of the product AB, based on the optically separated light absorption spectrum.

According to the optical analysis system 1, the non-destructive analysis can be conducted without affecting the chemical reaction system 30, whereby the disposal cost of a sample serving as an analysis target can be suppressed. According to the optical analysis system 1, the necessity to use a costly analyzer is eliminated, and the maintenance cost is suppressed. Thus, a simple and low-cost analysis system including the optical measuring apparatus 10 and the optical analyzer 20 can be realized.

According to the optical analysis system 1, the work process for optimizing the chemical reaction conditions is simplified, and the work efficiency for the optimization is improved. In particular, when the optical analysis system 1 monitors an amount of a predetermined structure of a compound, the optical analysis system 1 detects a change in another peak of a light absorption spectrum even when a light absorption spectrum peak indicating the predetermined structure is not changed, and thus can determine that an undesired side reaction other than the main reaction is in progress. According to the optical analysis system 1, thus, an abnormal reaction can be promptly detected. Thus, the operator can quickly acquire information for optimizing the chemical reaction conditions. The operator can improve the yield of product AB using such information.

In the first embodiment, the arithmetic unit 22 may calculate the optical spectrum of the product AB by subtracting the optical spectrum of each of the first raw material A and the second raw material B from the optical spectrum of the mixture C. Thus, the optical spectrum of the product AB buried in the optical spectrum of the mixture C is extracted. This improves the accuracy in calculation of the yield of the product AB based on the optical spectrum.

In the first embodiment, the chemical reaction system 30 may include the flow-type synthesis reaction system in which each of the first raw material A, the second raw material B, and the mixture C flows in the flow path. As a result, in the flow-type synthetic reaction system where it is difficult to extract a measuring sample, the light absorption spectrum can be measured in a non-contact manner by an optical method without the necessity to extract the sample. Thus, the yield of the product AB can be calculated on the real-time basis.

### Second Embodiment

A second embodiment of the present disclosure will be mainly described. In the second embodiment, the information regarding the chemical reaction refers mainly to information regarding an optical isomerism of the product AB. The second embodiment will be described focusing mainly on the information regarding the optical isomerism of the product AB. First, problems of the conventional techniques will be described.

Conventionally, in a case in which, for example, a product contains a compound formed by a peptide bond, i.e., a peptide, information regarding the optical isomerism of amino acids constituting the peptide is analyzed based on an analytical method including the HPLC method described above using a chiral column or a method using a circular dichroism disperser. The information regarding the optical isomerism includes, for example, whether each of a pair of compounds having an optical isomerism relationship with each other is produced, a mutual existence ratio in a case in which both of the pair of compounds are produced, an amount of each of the compounds, and the like.

To analyze the information regarding the optical isomerism of amino acid residues constituting a peptide, an operation to cut out one amino acid at a time from the N-terminal side of the peptide to be analyzed by performing hydrolysis is first performed. Next, the cut out amino acid is subjected to, for example, an HPLC analyzer equipped with a chiral column. A time of interaction with the chiral column differs depending on whether the sample amino acid subjected to the chiral column constitutes a D-form or an L-form. Thus, an elution time differs depending on whether the D form or the L form is formed. The information regarding the optical isomerism is analyzed using this time difference.

On the other hand, for example, in the method using the circular dichroism disperser also, the operation to cut out amino acids is performed in the same manner as the HPLC method using the chiral column. Then, a circular dichroic spectrum of each amino acid solution is obtained. Light absorption amounts for right-handed circularly polarized light and left-handed circularly polarized light differ based on ab optical activity of a optically active substance. Right-handed circularly polarized light and left-handed circularly polarized light are radiated at a wavelength corresponding to an absorption transition of ab analyte, and the circular dichroic spectrum is measured based on a difference in the absorption amounts. The analysis using the circular dichroism spectrum enables determination as to whether the optically active substance is the D-form or the L-form.

In such a conventional technique, when analyzing the information regarding the optical isomerism of amino acids constituting the peptide, a measuring sample needs to be extracted and the amino acid needs to be hydrolyzed and cut out from the peptide. This process complicates the analysis work and increases the work time. The extracted sample is processed for enantiomer analysis and discarded after the analysis. In the conventional technique, in a case using a rare analyte, the cost is increased due to such a destructive analysis.

The optical analysis system 1 according to the second embodiment of the present disclosure solves the above problems and analyzes information regarding the optical isomerism of the product AB synthesized in the chemical reaction system 30 in a non-destructive manner without the necessity to extract a sample. Hereinafter, the optical analysis system 1 according to the second embodiment of the present disclosure will be described with reference to the accompanying drawings.

The configuration and function of the optical analysis system 1 according to the second embodiment are the same as those of the first embodiment described above with reference to FIG. 1 to FIG. 3D and FIG. 5. Accordingly, corresponding contents described in the first embodiment similarly apply to the second embodiment. Hereinafter, aspects different from the first embodiment will be mainly described.

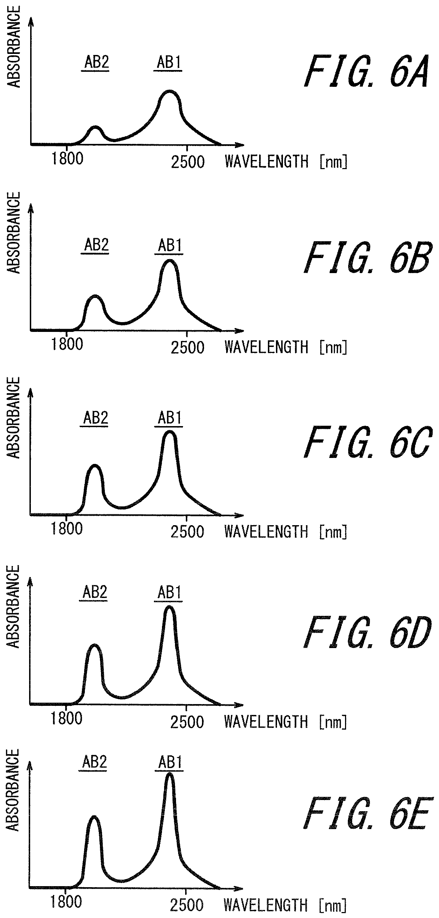

To explain the basic processing by the optical analysis system 1, isomerization of the compounds constituting the product AB is not considered in FIG. 3A to FIG. 3D. The isomerization of the compound constituting the product AB will be described with reference to FIG. 6A to FIG. 6E.

FIG. 6A is a schematic diagram illustrating an example of the light absorption spectrum of the product AB at the position P1. FIG. 6B is a schematic diagram illustrating an example of the light absorption spectrum of the product AB at the position P2. FIG. 6C is a schematic diagram illustrating an example of the light absorption spectrum of the product AB at the position P3. FIG. 6D is a schematic diagram illustrating an example of the light absorption spectrum of the product AB at the position P4. FIG. 6E is a schematic diagram illustrating an example of the light absorption spectrum of the product AB at the position P5.

Depending on the chemical reaction conditions in the chemical reaction system 30, the compounds constituting the product AB are isomerized and the product AB contains a pair of compounds having an enantiomer relationship with each other. Hereinafter, a case in which the product AB includes a pair of compounds having an enantiomer relationship with each other will be considered with reference to FIG. 6A to FIG. 6E.

At this time, as illustrated in FIG. 6C by way of example, in the light absorption spectrum of the product AB, a new peak appears at a different wavelength in addition to the peak illustrated in FIG. 3D that appears when isomerization does not occur. A light absorption spectrum peak attributed to a product AB 1 and a light absorption spectrum peak attributed to a product AB2 composed of an enantiomer c2 of a compound c1 forming the product AB1 that correspond to the peak illustrated in FIG. 3D appear. At this time, the product AB includes the product AB 1 and the product AB2.

As such, the present disclosure is based on a new knowledge that, when isomerization occurs in the product AB, the compound c1 and the enantiomer c2 differently interact with other chemical substances such as a solvent present in the surroundings and have different absorption transition wavelengths. The interaction include, for example, any interaction that affects a vibration state of a molecule and refers to an action of an attractive force or a repulsive force, formation of a bond, and a change in a strength level of the bond. The interaction includes, for example, an action of Van der Waals force, hydrogen bond, ionic bond, and the like.

For example, in a case in which each of the compound c1 and the enantiomer c2 exists as a simple substance without any other chemical substances present therearound, the light absorption spectrum of the compound c1 and the light absorption spectrum of the enantiomer c2 coincide with each other. When the interaction between the compound c1 and another chemical substance and the interaction between the enantiomer c2 and another chemical substance are different from each other, a difference occurs in changes of the respective energy level structures. Due to this difference, peaks appear at different wavelength positions in the light absorption spectrum of the compound c1 and the light absorption spectrum of the enantiomer c2.

For example, when isomerization occurs during a reaction in which amino acids are continuously linked in the chemical synthesis of a peptide, the difference in the interactions with surrounding molecules as described above occurs. The difference in the interactions causes a difference in light absorption spectrum shapes in the near-infrared region from a wavelength of 1800 nm to 2500 nm. Thus, by measuring the light absorption amount of the measuring light in the band of the near infrared light absorption spectrum from the wavelength of 1800 nm to 2500 nm, the amount of the enantiomer c2 of the synthesized peptide can be quantitatively calculated.

For example, by performing the measurement at a plurality of positions P1 to P5 in the flow chemical reaction tube 32 as illustrated in FIG. 1, light absorption spectra of the product AB1 and the product AB2 can be obtained using the plurality of detectors 12 every time the reaction time elapses. Thus, information regarding the optical isomerism of the product AB synthesized by the chemical reaction system 30 can be quantitatively analyzed at each of the positions. Accordingly, a temporal change of the information regarding the optical isomerism of the product AB can be recognized. For example, temporal changes of the amounts of the compound c1 and the enantiomer c2 can be quantitatively calculated.

Sequentially referring to FIGS. 6A to 6E, for example, as the proportions of the product AB 1 and the product AB2 in the mixture C gradually increase from the position P1 to the position P5, their light absorption spectrum peaks gradually increase. At this time, because the proportions of the first raw material A and the second raw material B in the mixture C gradually decrease, the light absorption spectrum peaks of the first raw material A and the second raw material B gradually decrease.

If a measuring sample is extracted when a fast-flowing solution in the flow chemical reaction tube 32 and the time from immediately after the mixing of the first raw material A and the second raw material B to the completion of the chemical synthesis is very short such as, for example, 0.1 to 0.5 seconds, it is difficult to define the reaction time. On the other hand, the optical analysis system 1 according to the second embodiment enables can perform the optical analysis without extracting a sample and thus can accurately recognize as to how many seconds after mixing the sample is analyzed.

According to the optical analysis system 1 of the second embodiment as described above, the information regarding the optical isomerism of the product AB obtained by the chemical synthesis can be analyzed based on the optical spectrum of the product AB calculated by the arithmetic unit 22. According to the optical analysis system 1 of the second embodiment, thus, the information regarding the optical isomerism of the product AB synthesized in the chemical reaction system 30 can be analyzed in a non-destructive manner without the necessity to extract a sample. The product AB includes one of a non-isomerized compound and a pair of compounds having an enantiomer relationship with each other, as described above. According to the optical analysis system 1, for example, the amount of the enantiomer c2 in the peptide in the chemical reaction system 30 can be quantitatively calculated based on the peak separated from the light absorption spectrum peak of the compound c1.

According to the optical analysis system 1, because the light absorption spectrum is measured in a non-contact manner by the optical method using the optical measuring apparatus 10, the yield of the product AB can be calculated on the real-time basis. According to the optical analysis system 1, it is not necessary to separate the product AB from the mixture C to measure the amount of the product AB, and the yield of the product AB can be quickly and easily calculated based on the optically separated light absorption spectrum.

According to the optical analysis system 1, a non-destructive analysis can be performed without affecting the chemical reaction system 30, whereby the disposal cost of a sample serving as an analysis target can be suppressed. According to the optical analysis system 1, the necessity to use a costly analyzer is eliminated, and the maintenance cost is suppressed. Thus, a simple and low-cost analysis system including the optical measuring apparatus 10 and the optical analyzer 20 can be realized.

According to the optical analysis system 1, the work process for optimizing the chemical reaction conditions is simplified, and the work efficiency for the optimization is improved. In particular, when the optical analysis system 1 monitors an amount of a predetermined structure of a compound, the optical analysis system 1 detects a change in another peak of the light absorption spectrum even when the light absorption spectrum peak indicating the predetermined structure is not changed, and thus can determine that an undesired side reaction other than the main reaction is in progress. According to the optical analysis system 1, thus, an abnormal reaction can be promptly detected. Thus, the operator can quickly obtain information for optimizing the chemical reaction conditions. The operator can improve the yield of product AB and suppress the occurrence rate of isomerization using such information.

According to the optical analysis system 1, the light absorption spectrum of the product AB reflects the interaction with other chemical substances such as a solvent existing in the surroundings. For example, the light absorption spectrum of the product AB has a peak at a wavelength position that reflects such an interaction. Thus, for example, a change in the interaction between a biomolecule such as a peptide and a peripheral molecule due to hydrogen bonding or the like can be measured. Accordingly, the optical analysis system 1 can be used also when a change in the hydrogen bond state needs to be measured, and such a change can be measured on the real-time basis.

In the second embodiment, the arithmetic unit 22 may calculate the optical spectrum of the product AB by subtracting the optical spectrum of each of the first raw material A and the second raw material B from the optical spectrum of the mixture C. Thus, the optical spectrum of the product AB buried in the optical spectrum of the mixture C is extracted. This improves the accuracy in analysis of the information regarding the optical isomerism of the product AB based on the optical spectrum.

In the second embodiment, the chemical reaction system 30 may include a flow-type synthesis reaction system in which each of the first raw material A, the second raw material B, and the mixture C flows in the flow path. As a result, also in the flow-type synthetic reaction system where it is difficult to extract a measuring sample, the light absorption spectrum can be measured in a non-contact manner by an optical method without the necessity to extract the sample. Thus, information regarding the optical isomerism of the product AB can be analyzed on the real-time basis.

In the second embodiment, the wavelength band of the measuring light may be included in the near infrared region from 1800 nm to 2500 nm. Thus, the optical analysis system 1 can calculate the optical spectrum that appears in the near-infrared region and is attributed to the optical isomerism of the product AB.

### Third Embodiment

A third embodiment of the present disclosure will be mainly described. In the third embodiment, the information regarding the chemical reaction refers mainly to a temporal change of a parameter associated with the chemical reaction. The third embodiment will be described focusing mainly on the temporal change of the parameter associated with the chemical reaction. The parameter associated with the chemical reaction includes, for example, the yield of product AB.

In the conventional method, to measure a parameter associated with a chemical reaction at a specific time, it is generally performed to extract a sample and separately measure the extracted sample using an analytical instruments. Thus, to recognize the temporal change of the parameter associated with the chemical reaction, it is necessary to extract a sample for each of a plurality of reaction times and measure the sample using various analytical instruments. The conventional measuring method is very complicated, as described above.

The optical analysis system 1 according to the third embodiment of the present disclosure solves such problems and can analyze the temporal change of the parameter associated with the chemical reaction in the chemical reaction system 30 in a non-destructive manner without the necessity to extract a sample. Hereinafter, the optical analysis system 1 according to the third embodiment of the present disclosure will be described with reference to the accompanying drawings.

The configuration and function of the optical analysis system 1 according to the third embodiment are the same as those of the first embodiment described above with reference to FIG. 1 to FIG. 3D and FIG. 5. Accordingly, corresponding contents described in the first embodiment similarly apply to the third embodiment. Hereinafter, the amount of the predetermined structure of the compound associated with the product AB described in the first embodiment, that is, the temporal change of the yield of the product AB will be described in more detail. The following description is also applied to the second embodiment in which the product AB includes the product AB1 and the product AB2 composed of the enantiomer c2 of the compound c1 forming the product AB1.

As described in the first embodiment, the irradiator 11 radiates irradiation light L1c at each of the plurality of positions P1, P2, P3, P4, and P5 located along the flow chemical reaction tube 32 on the downstream side of the microreactor 33 in which the mixture C flows. The five locations P1, P2, P3, P4, and P5 in the flow chemical reaction tube 32 are sequentially remote from the microreactor 33. The reaction time in mixture C increases from the position P1 to the position P5. The irradiator 11 irradiates the mixture C after the initiation of the synthesis with the irradiation light L1c for each of a plurality of reaction times. The reaction times may be calculated by, for example, dividing the distance from the microreactor 33 to each position by the flow rate of the solution flowing in the flow chemical reaction tube 32.

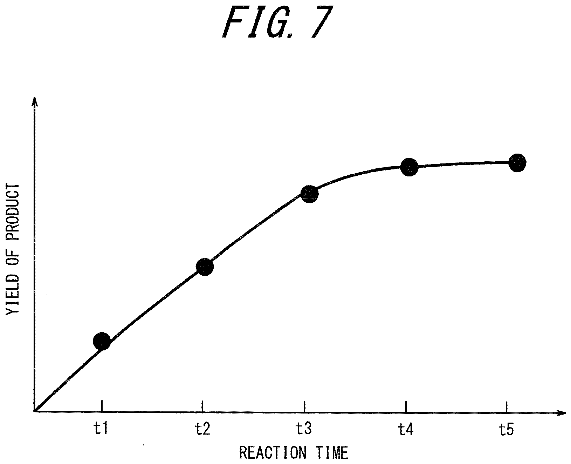

FIG. 7 is a diagram illustrating an example of the temporal change of the parameter associated with the chemical reaction calculated by the arithmetic unit 22 of the optical analysis system 1 according to the third embodiment. In the graph illustrated in FIG. 7, the vertical axis represents, for example, the yield of the product AB. The horizontal axis represents, for example, the reaction time in the mixture C, and reaction times t1, t2, t3, t4, and t5 respectively corresponding to the positions P1, P2, P3, P4, and P5 are indicated by dots.

The arithmetic unit 22 calculates the temporal change of the parameter associated with the chemical reaction, based on the optical spectrum of the product AB calculated at each of the plurality of reaction times t1, t2, t3, t4, and t5, as illustrated in FIG. 4A to FIG. 4E. For example, the arithmetic unit 22 calculates the yield of the product AB, based on the height of the peak in the light absorption spectrum at the position P1 as illustrated in FIG. 4A. Similarly, the arithmetic unit 22 calculates the yield of the product AB, based on the heights of the peaks in the light absorption spectrum at the positions P2, P3, P4, and P5, as illustrated respectively in FIGS. 4B, 4C, 4D, and 4E. The arithmetic unit 22 calculates the temporal change of the yield of the product AB by associating each calculated yield of the product AB with each reaction time. The arithmetic unit 22 may store the calculated temporal change of the yield of the product AB in the memory 25.

For example, prior to the initiation of chemical reaction, the arithmetic unit 22 may execute a simulation for a temporal change of the parameter associated with the chemical reaction, based on information that is input by the operator and acquired from the operation unit 24. The arithmetic unit 22 may store a simulation result in the memory 25.

When the chemical reaction is initiated after obtainment of the simulation result, the arithmetic unit 22 may further associate the simulation result stored in the memory 25 with the yield of the product AB for each reaction time that is actually calculated. The arithmetic unit 22 may display a correspondence between the simulation result and the actual temporal change of the yield of the product AB on, for example, the display unit 23, as illustrated in FIG. 7. In FIG. 7, for example, the solid line represents the simulation result, and the dots represent the temporal changes of the actual yield of the product AB.

In FIG. 7, the simulation result indicates a state in which, for example, the yield of the product AB increases at an approximately constant rate in proportion to the reaction time, the graph bends at a predetermined reaction time, and then the yield of the product AB becomes substantially constant with respect to the reaction times. For example, the yield of the product AB actually calculated for each of the reaction times t1, t2, t3, t4, and t5 also exhibits a similar behavior. In particular, the yield of product AB increases at an approximately constant rate in proportion to the reaction time, at the reaction times t1, t2, and t3. The graph bends between the reaction times t3 and t4. The yield of the product AB becomes substantially constant with respect to the reaction times, at the reaction times t4 and t5.

The operator sets the chemical reaction condition in the chemical reaction, based on the simulation result executed by the arithmetic unit 22, and initiates the chemical reaction, based on the chemical reaction condition. For example, the operator can confirm on the display unit 23 how the actual yield of the product AB follows the simulation result with time. Then, the operator can recognize the time at which the chemical reaction is completed, based on the bend point of the graph. The operator can confirm the consistency between the temporal change of the actual yield of the product AB and the simulation result, optimize the chemical reaction conditions, and optimize an inference model for simulation. The operator can confirm the consistency between the temporal change in the actual yield of the product AB and the simulation result on the real-time basis in a non-contact manner by the optical method using the optical analysis system 1. According to the optical analysis system 1, thus, the work process for optimizing the chemical reaction conditions and the like is simplified, and the work efficiency for the optimization is improved.

The arithmetic unit 22 may perform the operation as described above to be performed by the worker by machine learning. The arithmetic unit 22 may have any learning processing configuration to execute such an operation.

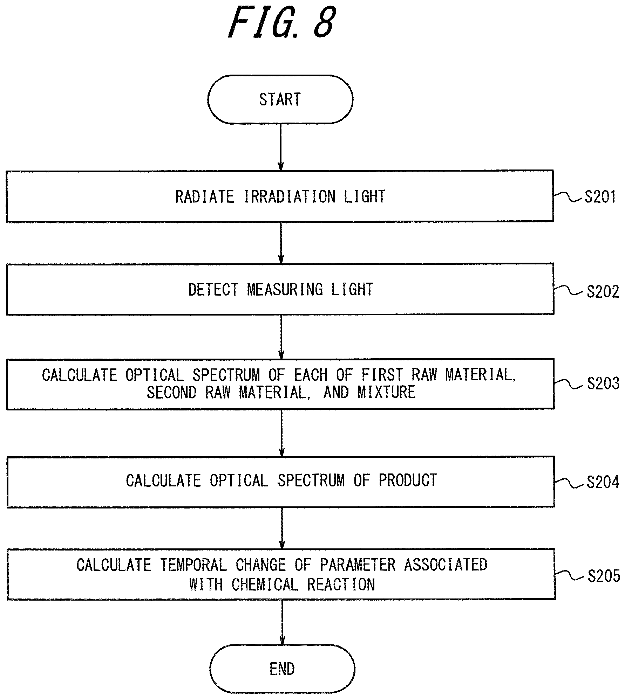

FIG. 8 is a flowchart illustrating an example of the operation by the optical analysis system 1 according to the third embodiment. A main flow of the optical analysis method using the optical analysis system 1 will be described with reference to FIG. 8.

In step S201, the optical analysis system 1 causes the irradiator 11 of the optical measuring apparatus 10 to irradiate the first raw material A and the second raw material B prior to the synthesis with the irradiation light and to irradiate the mixture C after the initiation of the synthesis with the irradiation light, at each of the plurality of reaction times.

In step S202, the optical analysis system 1 causes the detector 12 of the optical measuring apparatus 10 to detect the measuring light including the information regarding the optical spectrum of each of the first raw material A, the second raw material B, and the mixture C.

In step S203, the optical analysis system 1 causes the arithmetic unit 22 of the optical analyzer 20 to calculate the optical spectrum of each of the first raw material A, the second raw material B, and the mixture C.

In step S204, the optical analysis system 1 causes the arithmetic unit 22 of the optical analyzer 20 to calculate the optical spectrum of the product AB. At this time, the arithmetic unit 22 calculates the optical spectrum of the product AB by subtracting the optical spectrum of each of the first raw material A and the second raw material B from the spectral spectrum of the mixture C.

In step S205, the optical analysis system 1 causes the arithmetic unit 22 of the optical analyzer 20 to calculate the temporal change of the parameter associated with the chemical reaction, based on the optical spectrum of the product AB calculated for each of the plurality of the reaction times.

According to the optical analysis system 1 of the third embodiment as described above, the temporal change of the parameter associated with the chemical reaction can be calculated based on the optical spectrum of the product AB calculated by the arithmetic unit 22. According to the optical analysis system 1 of the third embodiment, thus, the temporal change of the parameter associated with the chemical reaction in the chemical reaction system 30 can be analyzed in a non-destructive manner without the necessity to extract a sample. According to the optical analysis system 1, because the light absorption spectrum is measured in a non-contact manner by the optical method using the optical measuring apparatus 10, the temporal change of the parameter associated with the chemical reaction can be calculated and monitored on the real-time basis. For example, the operator and the optical analysis system 1 can estimate the time at which the chemical reaction is completed or the like, on the real-time basis. According to the optical analysis system 1, the product AB does not need to be separated from the mixture C for the calculation of the temporal change of the parameter associated with the chemical reaction, and the temporal change of the parameter associated with the chemical reaction is quickly and easily calculated based on the optically separated light absorption spectrum.

According to the optical analysis system 1, because a non-destructive analysis can be performed without affecting the chemical reaction system 30, the disposal cost of the analyzed sample can be suppressed. Because the optical analysis system 1 is based on the measurement technique that does not affect the chemical reaction system 30, the chemical reaction system 30 does not need to be stopped for the purpose of measurement.

According to the optical analysis system 1, the necessity to use a costly analyzer is eliminated, and the maintenance cost is suppressed. A simple and low-cost analysis system including the optical measuring apparatus 10 and the optical analyzer 20 can be realized.

In the third embodiment, the parameter associated with the chemical reaction includes the yield of the product AB by way of example, and the temporal change of the product AB has been mainly described. The parameter associated with the chemical reaction is not limited thereto and may include any other parameters. For example, the parameter associated with the chemical reaction may include temperature in the chemical reaction system 30, in particular, the temperature in the flow chemical reaction tube 32 on the downstream side of the microreactor 33, or a purity of the product AB.

In a case in which the parameter associated with the chemical reaction is the temperature of the chemical reaction system 30, the optical analysis system 1 calculates, for example, a temporal change of the temperature of the chemical reaction system 30 that indicates the temperature at each reaction time attributed to reaction heat based on the chemical reaction. For example, the arithmetic unit 22 calculates the temperature of the chemical reaction system 30, based on the height of the peak with respect to the light absorption spectrum at each position as illustrated in FIG. 4A to FIG. 4E. Further, the arithmetic unit 22 may calculate, for example, the temperature of the chemical reaction system 30, based on the peak wavelength position with respect to the light absorption spectrum at each position as illustrated in FIG. 4A to FIG. 4E.

In a case in which the optical analysis system 1 can obtain the temporal change of the temperature of the chemical reaction system 30, the operator and the optical analysis system 1 can analyze how the change of the temperature of the chemical reaction system 30 affects the chemical reaction. For example, the operator and the optical analysis system 1 can easily optimize the chemical reaction conditions with respect to the temperature that further improves the yield of the product AB. The operator and the optical analysis system 1 can determine that an undesired side reaction different from the main reaction is in progress, based on a determination criterion such as whether the temperature of the chemical reaction system 30 has risen based on an exothermic reaction.

In the description of the third embodiment, the optical analysis system 1 calculates the parameter associated with the chemical reaction at the five positions P1, P2, P3, P4, and P5 to calculate the temporal change of the parameter associated with the chemical reaction. However, the number of measurement points is not limited thereto and may be at least two.

It will be apparent to those who are skilled in the art that the present invention can be realized in forms other than the embodiments described above. Accordingly, the foregoing description is merely illustrative and not limiting in any manner. The scope of the present invention is defined by the appended claims.

For example, the shape, arrangement, orientation, number, and the like of each of the element described above are not limited to the contents described above or the illustration in the drawings. Any shape, arrangement, orientation, number, and the like of each element that are capable of realizing the function can be adopted.

The arithmetic unit 22 may highlight the light absorption spectrum of the product AB using any display method instead of or in addition to the process of subtracting the light absorption spectra. The display method includes, for example, a method for displaying a cursor, a vertical line, or the like in accordance with the light absorption spectrum peak, a method for changing the display color of the entire light absorption spectrum, a method for blinking the entire light absorption spectrum, or the like.

Although it has been described in the first to third embodiments that the chemical reaction system 30 includes a flow-type synthesis reaction system in which the materials flows in the flow chemical reaction tube 32, the chemical reaction system 30 is not limited thereto. The chemical reaction system 30 may include a batch-type synthetic reaction system. For example, in a case in which the chemical reaction system 30 is the batch-type synthetic reaction system, the irradiator 11 does not need to radiate the irradiation light at a plurality of positions as described above so as to enable the arithmetic unit 22 to calculate the temporal change of the parameter associated with the chemical reaction in the third embodiment, and the irradiator 11 may irradiate one position with the irradiation light.

Although it has been described in the first to third embodiments that the wavelength band of the measuring light is included in the near infrared region from 1800 nm to 2500 nm, the wavelength band of the measuring light is not limited thereto. The measuring light may have any wavelength band in which the optical analysis system 1 can analyze the light absorption spectrum of the product AB. For example, the wavelength band of the measuring light may be included in any wavelength range including an ultraviolet region, a visible light region, a middle infrared region, or a far infrared region.

Although it has been described in the first to third embodiments that the measuring light includes the transmitted light based on the irradiation light and the optical spectrum includes the light absorption spectrum, this is not restrictive. The optical analysis system 1 may calculate the optical spectrum of the product AB using any spectroscopy other than the absorption spectroscopic method. The spectroscopy may include, for example, fluorescence spectroscopy or Raman spectroscopy. In fluorescence spectroscopy, for example, the measuring light 44 includes fluorescence based on the irradiation light and the optical spectrum includes a fluorescence spectrum. In the Raman spectroscopy, for example, the measuring light includes Raman light based on the irradiation light, and the optical spectrum includes a Raman spectrum.

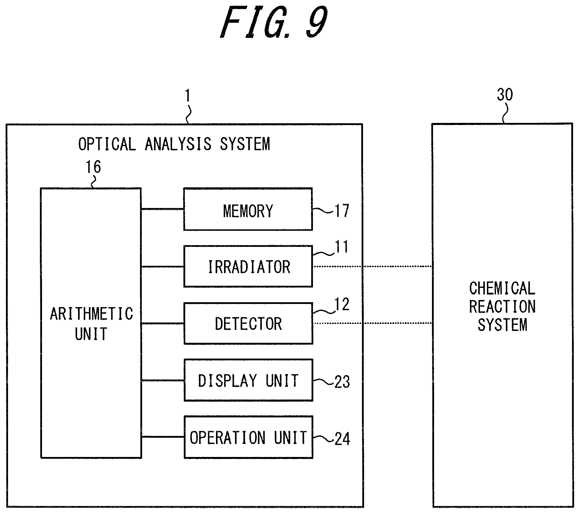

FIG. 9 is a block diagram illustrating an example variation of the optical analysis system 1 according to the first to third embodiments. In the first to third embodiments, the optical analysis system 1 has been described to be configured using a plurality of different devices having respective functions of each element, based on the optical measuring apparatus 10 and the optical analyzer 20. The configuration of the optical analysis system 1 is not limited thereto. For example, the optical analysis system 1 according to the example variation may be configured using one device in which the functions of the elements are integrated, as illustrated in FIG. 9.

The optical analysis system 1 according to the example variation includes a calculation unit 16 having integrated functions of the controller 13 and the arithmetic unit 22 in the first to third embodiments, the memory 17 having integrated functions of the memory 15 and the memory 25 in the first to third embodiments, the irradiator 11, the detector 12, the display unit 23, and the operation unit 24. Descriptions of functions of elements described in the first to third embodiments similarly apply to descriptions of functions of corresponding elements of the optical analysis system 1 according to the example variation.

The optical analysis system 1 according to the example variation as described above has an effect similar to effects of the first to third embodiments. Further, because one apparatus performs the processing such as the measurement of the light absorption amount for each wavelength of the measuring light and the calculation of the optical spectrum, the configuration of the optical analysis system 1 can be simplified.

For example, the functions and the like included in each step of the optical analysis method described above can be rearranged without logical inconsistency, such that a plurality of steps are combined into one step or subdivided.

### REFERENCE SIGNS LIST

- 1: optical analysis system
- 10: optical measuring apparatus
- 11: irradiator
- 12: detector
- 13: controller
- 14: communication interface
- 15: memory
- 16: arithmetic unit
- 17: memory
- 20: optical analyzer
- 21: communication interface
- 22: arithmetic unit
- 23: display unit
- 24: operation unit
- 25: memory
- 30: chemical reaction system
- 31: liquid feeding pump
- 32: flow chemical reaction tube (flow path)
- 33: microreactor
- 40: data communication cable
- A: first raw material
- B: second raw material

- AB, AB1, AB2: product

- C: mixture
- c1: compound
- c2: enantiomer

- L1a, L1b, L1c: irradiation light
- L2a, L2b, L2c: measuring light
- P1, P2, P3, P4, P5: position
- t1, t2, t3, t4, t5: reaction time

## Claims

1. An optical analysis system (1) comprising:
an irradiator (11) configured to, in a chemical reaction system (30) for obtaining a product (AB, AB1, AB2) by synthesizing a first raw material (A) and a second raw material (B), irradiate each of the first raw material (A) and the second raw material (B) prior to initiation of synthesis with irradiation light (L1a, L1b, L1c) and irradiate a mixture (C) after initiation of the synthesis that includes the first raw material (A), the second raw material (B), and the product (AB, AB1, AB2) with irradiation light (L1a, L1b, L1c);
a detector (12) configured to detect measuring light (L2a, L2b, L2c) that is based on the irradiation light (L1a, L1b, L1c) radiated by the irradiator (11) and includes information regarding an optical spectrum of each of the first raw material (A), the second raw material (B), and the mixture (C); and
an arithmetic unit (22; 16)
configured to calculate the optical spectrum of each of the first raw material (A), the second raw material (B), and the mixture (C) based on the detected measuring light (L2a, L2b, L2c) and, based on the optical spectrum of the first raw material (A), the optical spectrum of the second raw material (B), and the optical spectrum of the mixture (C), calculate an optical spectrum of the product (AB, AB1, AB2).

2. The optical analysis system (1) according to claim 1,
wherein the product (AB, AB1, AB2) includes one of a non-isomerized compound and a pair of compounds having an enantiomer relationship with each other.

3. The optical analysis system (1) according to claim 1,
wherein the irradiator (11) is configured to irradiate the mixture (C) with the irradiation light (L1a, L1b, L1c) for each of a plurality of reaction times (t1, t2, t3, t4, t5), and
the arithmetic unit (22) is configured to calculate a temporal change of a parameter associated with a chemical reaction, based on the optical spectrum of the product (AB, AB1, AB2) calculated for each of the plurality of reaction times (t1, t2, t3, t4, t5).

4. The optical analysis system (1) according to claim 3,
wherein the parameter associated with the chemical reaction includes a yield of the product (AB, AB1, AB2).

5. The optical analysis system (1) according to any one of claims 1 to 4,
wherein the arithmetic unit (22) is configured to calculate the optical spectrum of the product (AB, AB1, AB2) by subtracting the optical spectrum of each of the first raw material (A) and the second raw material (B) from the optical spectrum of the mixture (C).

6. The optical analysis system (1) according to any one of claims 1 to 5,
wherein the chemical reaction system (30) includes a flow-type synthetic reaction system in which each of the first raw material (A), the second raw material (B), and the mixture (C) flows in a flow path.

7. The optical analysis system (1) according to claim 6,
wherein the irradiator (11) is configured to radiate the irradiation light (L1a, L1b, L1c) at each of a plurality of positions (P1, P2, P3, P4, P) located along the flow path for flowing the mixture (C).

8. The optical analysis system (1) according to any one of claims 1 to 7,
wherein each of the first raw material (A) and the second raw material (B) includes an amino acid, and
the product (AB, AB1, AB2) includes a compound formed by a peptide bond.

9. The optical analysis system (1) according to any one of claims 1 to 8,
wherein a wavelength band of the measuring light (L2, L2a, L2b, L2c) is included in a near infrared region from 1800 nm to 2500 nm.

10. The optical analysis system (1) according to any one of claims 1 to 9,
wherein the measuring light (L2a, L2b, L2c) includes transmitted light based on the irradiation light (L1a, L1b, L1c) transmitted through each of the first raw material (A), the second raw material (B), and the mixture (C), and
the optical spectrum includes a light absorption spectrum.

11. An optical analysis method comprising:
a step (S101; S201) of, in a chemical reaction system (30) for obtaining a product (AB, AB1, AB2) by synthesizing a first raw material (A) and a second raw material (B), irradiating each of the first raw material (A) and the second raw material (B) prior to initiation of synthesis with irradiation light (L1a, L1b, L1c) and irradiating a mixture (C) after initiation of the synthesis that includes the first raw material (A), the second raw material (B), and the product (AB, AB1, AB2) with irradiation light (L1a, L1b, L1c);
a step (S102; S202) of detecting measuring light (L2a, L2b, L2c) that is based on the irradiation light (L1a, L1b, L1c) and includes information regarding an optical spectrum of each of the first raw material (A), the second raw material (B), and the mixture (C); and
a step (S103; S203) of calculating the optical spectrum of each of the first raw material (A), the second raw material (B), and the mixture (C) based on the detected measuring light (L2a, L2b, L2c) and, based on the optical spectrum of the first raw material (A), the optical spectrum of the second raw material (B), and the optical spectrum of the mixture (C), calculating (S104; S204) an optical spectrum of the product (AB, AB1, AB2).

12. The optical analysis method according to claim 11,
wherein the product (AB, AB1, AB2) includes one of a non-isomerized compound and a pair of compounds having an enantiomer relationship with each other.

13. The optical analysis method according to claim 11,
wherein the step of radiating the irradiation light (L1a, L1b, L1c) includes a step of irradiating the mixture (C) with the irradiation light (L1a, L1b, L1c) for each of a plurality of reaction times (t1, t2, t3, t4, t5), and the optical analysis method comprises a step (S205) of calculating a temporal change of a parameter associated with a chemical reaction, based on the optical spectrum of the product (AB, AB1, AB2) calculated for each of the plurality of reaction times (t1, t2, t3, t4, t5).

14. The optical analysis method according to any one of claims 11 to 13,
wherein, in the step of calculating the optical spectrum of the product (AB, AB1, AB2), the optical spectrum of the product (AB, AB1, AB2) is calculated by subtracting the optical spectrum of each of the first raw material (A) and the second raw material (B) from the optical spectrum of the mixture (C).

## Patentansprüche

1. Ein optisches Analysesystem (1), das folgende Merkmale aufweist:
einen Bestrahler (11), der dazu ausgebildet ist, in einem chemischen Reaktionssystem (30) zum Erhalten eines Produkts (AB, AB1, AB2) durch Synthetisieren eines ersten Rohmaterials (A) und eines zweiten Rohmaterials (B), sowohl das erste Rohmaterial (A) als auch das zweite Rohmaterial (B) vor der Einleitung einer Synthese mit Bestrahlungslicht (L1a, L1b, L1c) zu bestrahlen und eine Mischung (C) nach Einleitung der Synthese, die das erste Rohmaterial (A), das zweite Rohmaterial (B) und das Produkt (AB, AB1, AB2) umfasst, mit Bestrahlungslicht (L1a, L1b, L1c) zu bestrahlen;
einen Detektor (12), der dazu ausgebildet ist, Messlicht (L2a, L2b, L2c), das auf dem Bestrahlungslicht (L1a, L1b, L1c) basiert, das durch den Bestrahler (11) abgestrahlt wird, und Informationen in Bezug auf ein optisches Spektrum sowohl des ersten Rohmaterials (A) als auch des zweiten Rohmaterials (B) und der Mischung (C) aufweist, zu erfassen; und
eine Recheneinheit (22; 16), die dazu ausgebildet ist, das optische Spektrum sowohl des ersten Rohmaterials (A) als auch des zweiten Rohmaterials (B) und der Mischung (C) basierend auf dem erfassten Messlicht (L2a, L2b, L2c) zu berechnen und, basierend auf dem optischen Spektrum des ersten Rohmaterials (A), dem optischen Spektrum des zweiten Rohmaterials (B) und dem optischen Spektrum der Mischung (C), ein optisches Spektrum des Produkts (AB, AB1, AB2) zu berechnen.

2. Das optische Analysesystem (1) gemäß Anspruch 1,
bei dem das Produkt (AB, AB1, AB2) eine einer nichtisomerisierten Verbindung und eines Paars von Verbindungen mit einer Enantiomerbeziehung zueinander aufweist.

3. Das optische Analysesystem (1) gemäß Anspruch 1,
bei dem der Bestrahler (11) dazu ausgebildet ist, die Mischung (C) mit dem Bestrahlungslicht (L1a, L1b, L1c) für jede einer Mehrzahl von Reaktionszeiten (t1, t2, t3, t4, t5) zu bestrahlen, und
die Recheneinheit (22) dazu ausgebildet ist, eine zeitliche Änderung eines Parameters, der einer chemischen Reaktion zugeordnet ist, basierend auf dem optischen Spektrum des Produkts (AB, AB1, AB2) zu berechnen, das für jede der Mehrzahl von Reaktionszeiten (t1, t2, t3, t4, t5) berechnet wird.

4. Das optische Analysesystem (1) gemäß Anspruch 3,
bei dem der Parameter, der der chemischen Reaktion zugeordnet ist, einen Ertrag des Produkts (AB, AB1, AB2) umfasst.

5. Das optische Analysesystem (1) gemäß einem der Ansprüche 1 bis 4,
bei dem die Recheneinheit (22) dazu ausgebildet ist, das optische Spektrum des Produkts (AB, AB1, AB2) zu berechnen durch Subtrahieren des optischen Spektrums sowohl des ersten Rohmaterials (A) als auch des zweiten Rohmaterials (B) von dem optischen Spektrum der Mischung (C).

6. Das optische Analysesystem (1) gemäß einem der Ansprüche 1 bis 5,
bei dem das chemische Reaktionssystem (30) ein synthetisches Reaktionssystem vom Strömungstyp aufweist, bei dem sowohl das erste Rohmaterial (A) als auch das zweite Rohmaterial (B) und die Mischung (C) in einem Strömungsweg strömen.

7. Das optische Analysesystem (1) gemäß Anspruch 6,
bei dem der Bestrahler (11) dazu ausgebildet ist, das Bestrahlungslicht (L1a, L1b, L1c) an jeder einer Mehrzahl von Positionen (P1, P2, P3, P4, P) abzustrahlen, die sich entlang des Strömungswegs zum Strömenlassen der Mischung (C) befinden.

8. Das optische Analysesystem (1) gemäß einem der Ansprüche 1 bis 7,
bei dem sowohl das erste Rohmaterial (A) als auch das zweite Rohmaterial (B) eine Aminosäure aufweist und
das Produkt (AB, AB1, AB2) eine Verbindung aufweist, die durch eine Peptidbindung gebildet ist.

9. Das optische Analysesystem (1) gemäß einem der Ansprüche 1 bis 8,
bei dem ein Wellenlängenband des Messlichts (L2, L2a, L2b, L2c) in einer Nahinfrarotregion von 1800 nm bis 2500 nm enthalten ist.

10. Das optische Analysesystem (1) gemäß einem der Ansprüche 1 bis 9,
bei dem das Messlicht (L2a, L2b, L2c) durchgelassenes Licht basierend auf dem Bestrahlungslicht (L1a, L1b, L1c) aufweist, das durch sowohl das erste Rohmaterial (A) als auch das zweite Rohmaterial (B) und die Mischung (C) durchgelassen wird, und
das optische Spektrum ein Lichtabsorptionsspektrum aufweist.

11. Ein optisches Analyseverfahren, das folgende Schritte aufweist:
einen Schritt (S101; S201) eines, in einem chemischen Reaktionssystem (30) zum Erhalten eines Produkts (AB, AB1, AB2) durch Synthetisieren eines ersten Rohmaterials (A) und eines zweiten Rohmaterials (B), Bestrahlens sowohl des ersten Rohmaterials (A) als auch des zweiten Rohmaterials (B) vor der Einleitung einer Synthese mit Bestrahlungslicht (L1a, L1b, L1c) und eines Bestrahlens einer Mischung (C) nach Einleitung der Synthese, die das erste Rohmaterial (A), das zweite Rohmaterial (B) und das Produkt (AB, AB1, AB2) umfasst, mit Bestrahlungslicht (L1a, L1b, L1c);
einen Schritt (S102; S202) eines Erfassens von Messlicht (L2a, L2b, L2c), das auf dem Bestrahlungslicht (L1a, L1b, L1c) basiert und Informationen in Bezug auf ein optisches Spektrum sowohl des ersten Rohmaterials (A) als auch des zweiten Rohmaterials (B) und der Mischung (C) umfasst; und
einen Schritt (S103; S203) eines Berechnens des optischen Spektrums sowohl des ersten Rohmaterials (A) als auch des zweiten Rohmaterials (B) und der Mischung (C) basierend auf dem erfassten Messlicht (L2a, L2b, L2c) und, basierend auf dem optischen Spektrum des ersten Rohmaterials (A), dem optischen Spektrum des zweiten Rohmaterials (B) und dem optischen Spektrum der Mischung (C), eines Berechnens (S104; S204) eines optischen Spektrums des Produkts (AB, AB1, AB2).

12. Das optische Analysesystem (1) gemäß Anspruch 11,
bei dem das Produkt (AB, AB1, AB2) eine einer nichtisomerisierten Verbindung und eines Paars von Verbindungen mit einer Enantiomerbeziehung zueinander aufweist.

13. Das optische Analyseverfahren gemäß Anspruch 11,
bei dem der Schritt des Abstrahlens des Bestrahlungslichts (L1a, L1b, L1c) einen Schritt des Bestrahlens der Mischung (C) mit dem Bestrahlungslicht (L1a, L1b, L1c) für jede einer Mehrzahl von Reaktionszeiten (t1, t2, t3, t4, t5) aufweist und das optische Analyseverfahren einen Schritt (S205) eines Berechnens einer zeitlichen Änderung eines Parameters, der einer chemischen Reaktion zugeordnet ist, basierend auf dem optischen Spektrum des Produkts (AB, AB1, AB2) aufweist, das für jede der Mehrzahl von Reaktionszeiten (t1, t2, t3, t4, t5) berechnet wird.

14. Das optische Analyseverfahren gemäß einem der Ansprüche 11 bis 13,
bei dem bei dem Schritt des Berechnens des optischen Spektrums des Produkts (AB, AB1, AB2) das optische Spektrum des Produkts (AB, AB1, AB2) berechnet wird durch Subtrahieren des optischen Spektrums sowohl des ersten Rohmaterials (A) als auch des zweiten Rohmaterials (B) von dem optischen Spektrum der Mischung (C).

## Revendications

1. Système d'analyse optique (1) comprenant:
un irradiateur (11) configuré pour irradier, dans un système de réaction chimique (30) destiné à obtenir un produit (AB, AB1, AB2) en synthétisant une première matière première (A) et une deuxième matière première (B), chacune parmi la première matière première (A) et la deuxième matière première (B) avant de commencer la synthèse par de la lumière d'irradiation (L1a, L1b, L1c), et pour irradier un mélange (C) après le début de la synthèse qui comporte la première matière première (A), la deuxième matière première (B) et le produit (AB, AB1, AB2) par de la lumière d'irradiation (L1a, L1b, L1c);
un détecteur (12) configuré pour détecter une lumière de mesure (L2a, L2b, L2c) qui est basée sur la lumière d'irradiation (L1a, L1b, L1c) rayonnée par l'irradiateur (11) et comporte des informations relatives à un spectre optique de chacun parmi la première matière première (A), la deuxième matière première (B) et le mélange (C); et
une unité arithmétique (22; 16) configurée pour calculer le spectre optique de chacun parmi la première matière première (A), la deuxième matière première (B) et le mélange (C) sur base de la lumière de mesure détectée (L2a, L2b, L2c) et pour calculer, sur base du spectre optique de la première matière première (A), du spectre optique de la deuxième matière première (B) et du spectre optique du mélange (C), un spectre optique du produit (AB, AB1, AB2).

2. Système d'analyse optique (1) selon la revendication 1,
dans lequel le produit (AB, AB1, AB2) comporte l'un parmi un composé non isomérisé et une paire de composés présentant un rapport énantiomère entre eux.

3. Système d'analyse optique (1) selon la revendication 1,
dans lequel l'irradiateur (11) est configuré pour irradier le mélange (C) par la lumière d'irradiation (L1a, L1b, L1c) pour chacun d'une pluralité de temps de réaction (t1, t2, t3, t4, t5), et
l'unité arithmétique (22) est configurée pour calculer un changement temporel d'un paramètre associé à une réaction chimique, sur base du spectre optique du produit (AB, AB1, AB2) calculé pour chacun de la pluralité de temps de réaction (t1, t2, t3, t4, t5).

4. Système d'analyse optique (1) selon la revendication 3,
dans lequel le paramètre associé à la réaction chimique comporte un rendement du produit (AB, AB1, AB2).

5. Système d'analyse optique (1) selon l'une quelconque des revendications 1 à 4,
dans lequel l'unité arithmétique (22) est configurée pour calculer le spectre optique du produit (AB, AB1, AB2) en soustrayant le spectre optique de chacune parmi la première matière première (A) et la deuxième matière première (B) du spectre optique du mélange (C).

6. Système d'analyse optique (1) selon l'une quelconque des revendications 1 à 5,
dans lequel le système de réaction chimique (30) comporte un système de réaction synthétique de type en circulation dans lequel chacun parmi la première matière première (A), la deuxième matière première (B) et le mélange (C) circule dans un trajet de circulation.

7. Système d'analyse optique (1) selon la revendication 6,
dans lequel l'irradiateur (11) est configuré pour irradier la lumière d'irradiation (L1a, L1b, L1c) à chacune d'une pluralité de positions (P1, P2, P3, P4, P) situées le long du trajet de circulation pour faire circuler le mélange (C).

8. Système d'analyse optique (1) selon l'une quelconque des revendications 1 à 7,
dans lequel chacune parmi la première matière première (A) et la deuxième matière première (B) comporte un acide aminé, et
le produit (AB, AB1, AB2) comporte un composé formé par une liaison peptidique.

9. Système d'analyse optique (1) selon l'une quelconque des revendications 1 à 8,
dans lequel une bande de longueurs d'onde de la lumière de mesure (L2, L2a, L2b, L2c) est comprise dans une région proche infrarouge de 1800 nm à 2500 nm.

10. Système d'analyse optique (1) selon l'une quelconque des revendications 1 à 9,
dans lequel la lumière de mesure (L2a, L2b, L2c) comporte de la lumière transmise sur base de la lumière d'irradiation (L1a, L1b, L1c) transmise à travers chacun parmi la première matière première (A), la deuxième matière première (B) et le mélange (C), et
le spectre optique comporte un spectre d'absorption de lumière.

11. Procédé d'analyse optique comprenant:
une étape (5101; S201) consistant à irradier, dans un système de réaction chimique (30) pour obtenir un produit (AB, AB1, AB2) en synthétisant une première matière première (A) et une deuxième matière première (B), chacune parmi la première matière première (A) et la deuxième matière première (B) avant de commencer la synthèse par de la lumière d'irradiation (L1a, L1b, L1c), et à irradier un mélange (C) après le début de la synthèse qui comporte la première matière première (A), la deuxième matière première (B) et le produit (AB, AB1, AB2) par de la lumière d'irradiation (L1a, L1b, L1c);
une étape (S102; S202) consistant à détecter la lumière de mesure (L2a, L2b, L2c) qui est basée sur la lumière d'irradiation (L1a, L1b, L1c) et comporte des informations relatives à un spectre optique de chacun parmi la première matière première (A), la deuxième matière première (B), et le mélange (C); et
une étape (S103; S203) consistant à calculer le spectre optique de chacun parmi la première matière première (A), la deuxième matière première (B) et le mélange (C) sur base de la lumière de mesure détectée (L2a, L2b, L2c) et à calculer (S104; S204), sur base du spectre optique de la première matière première (A), du spectre optique de la deuxième matière première (B) et du spectre optique du mélange (C), un spectre optique du produit (AB, AB1, AB2).

12. Procédé d'analyse optique selon la revendication 11,
dans lequel le produit (AB, AB1, AB2) comporte l'un parmi un composé non isomérisé et une paire de composés présentant un rapport énantiomère entre eux.

13. Procédé d'analyse optique selon la revendication 11,
dans lequel l'étape d'irradiation de la lumière d'irradiation (L1a, L1b, L1c) comporte une étape consistant à irradier le mélange (C) par la lumière d'irradiation (L1a, L1b, L1c) pour chacun d'une pluralité de temps de réaction (tl, t2, t3, t4, t5), et le procédé d'analyse optique comprend une étape (S205) consistant à calculer un changement temporel d'un paramètre associé à une réaction chimique, sur base du spectre optique du produit (AB, AB1, AB2) calculé pour chacun de la pluralité de temps de réaction (t1, t2, t3, t4, t5).

14. Procédé d'analyse optique selon l'une quelconque des revendications 11 à 13,
dans lequel, à l'étape de calcul du spectre optique du produit (AB, AB1, AB2), le spectre optique du produit (AB, AB1, AB2) est calculé en soustrayant le spectre optique de chacune parmi la première matière première (A) et la deuxième matière première (B) du spectre optique du mélange (C).
